# EUROPÄISCHE PATENTSCHRIFT

(11) **EP 3 360 740 B1**
(45) Veröffentlichungstag und Bekanntmachung des Hinweises auf die Patenterteilung: **27.11.2019**
(21) Anmeldenummer: 18154655.7
(22) Anmeldetag: 01.02.2018
(51) Int. Cl.: B60T 8/17, B60T 8/32, B62L 3/02, B60T 13/68, B62K 25/04, B62L 1/00, B60T 11/224, B60T 13/66, B60T 7/08, B60T 8/48, B62J 99/00, B62M 6/40

(54) **BAUGRUPPE FÜR EIN ZWEIRADFAHRZEUG UND VERFAHREN ZUR VERBESSERUNG DES BREMSVERHALTENS EINES ZWEIRADFAHRZEUGS**
ASSEMBLY FOR A TWO-WHEELED VEHICLE AND METHOD FOR IMPROVING THE BRAKING BEHAVIOUR OF A TWO-WHEELED VEHICLE
MODULE POUR UN VÉHICULE À DEUX ROUES ET PROCÉDÉ POUR AMÉLIORER LE COMPORTEMENT AU FREINAGE D'UN VÉHICULE À DEUX ROUES

(30) Priorität: 09.02.2017 DE 102017202019
(43) Veröffentlichungstag der Anmeldung: 15.08.2018
(73) Patentinhaber: Robert Bosch GmbH, 70442 Stuttgart (DE)
(72) Erfinder: Wienss, Andreas, 72800 Eningen Unter Achalm (DE); Widmaier, Georg, 71229 Leonberg (DE); Lipowsky, Tobias Dominik, 70794 Filderstadt (DE); Dasbach, Gregor, 72074 Tuebingen (DE); Bozler, Stefan, 72631 Aichtal (DE)

(56) Entgegenhaltungen:
- EP-A1- 2 062 758
- WO-A1-2008/130336
- WO-A1-2014/108235
- DE-A1-102007 054 771
- DE-A1-102013 217 754
- DE-A1-102014 210 382
- US-A- 6 106 078

## Beschreibung

### Stand der Technik

Die vorliegende Erfindung betrifft eine Zweirad-Baugruppe, insbesondere eine Baugruppe für ein Elektrofahrrad sowie ein Verfahren zur Verbesserung eines Bremsverhaltens eines Zweirads, insbesondere eines Elektrofahrrads.

Moderne Zweiräder, wie beispielsweise Elektrofahrräder oder Mountainbikes weisen häufig Federgabeln und/oder mittlere Dämpfungselemente am Rahmen des Zweirads auf, um einen Fahrkomfort zu verbessern. Ferner weisen moderne Zweiräder häufig hydraulische Bremseinrichtungen auf, welche ein verbessertes Bremsverhalten als beispielsweise Felgenbremsen bereitstellen. Während des normalen Fahrens mit dem Zweirad treten hierbei Federungsvorgänge auf, wobei die bei den Federungsvorgängen entstehende Energie bisher am Zweirad nicht genutzt wird.

Aus US 6 106 078 A ist ferner ein Bremsbetätigungssystem mit Druckerhöhung durch einen Federungsdämpfer bekannt.

Weiterhin zeigt DE 10 2007 054771 A1 einen elektromechanischen Stoßdämpfer bzw. elektromechanisches Feder-Dämpfer Element zur Umwandlung von Bewegungen und Schwingungen in elektrische Energie.

Aus WO 2008/130336 A1 ist zudem ein integriertes Fahrrad-Schalt- und Federungssystem bekannt.

WO 2014/108235 A1 zeigt ein hydraulisches Antiblockiersystem für ein Zweirad.

DE 10 2013 217754 A1 zeigt weiterhin eine Wegfahrsperre für ein Fahrrad.

Aus EP 2 062 758 A1 ist zudem eine Vorrichtung mit einem Federungssystem sowie ein Verfahren zur Einstellung eines Federungssystems bekannt.

Ferner zeigt DE 10 2014 210382 A1 ein Verfahren zur Verteilung einer Bremskraft und eine Bremseinrichtung.

Aus der Schrift WO 2008/130336 A1 ist ein Fahrrad bekannt, bei dem eine Federung wenigstens eines Teils des Fahrradrahmens in Abhängigkeit von einer Bremsbetätigung gesteuert werden kann. Hierbei ist die Federung mit einem Ventil ausgestattet, welches geschlossen werden kann.

### Offenbarung der Erfindung

Die erfindungsgemäße Zweirad-Baugruppe mit den Merkmalen des Anspruchs 1 weist demgegenüber den Vorteil auf, dass Energie, welche mittels einer Federeinrichtung an einem Zweirad erzeugt wird, auch genutzt wird. Hierzu weist die erfindungsgemäße Zweirad-Baugruppe eine Federeinrichtung sowie eine hydraulische Bremseinrichtung auf. Die Bremseinrichtung umfasst eine Radbremse, einen Bremsauslöser, z. B. einen Bremshebel, sowie eine hydraulische Bremsleitung, welche die Radbremse mit dem Bremsauslöser verbindet. Ferner umfasst die Zweirad-Baugruppe eine Koppeleinrichtung, welche die Federeinrichtung und die Bremseinrichtung miteinander koppelt. Durch Verwendung der Koppeleinrichtung kann somit eine mittels der Federeinrichtung bereitgestellte Energie während eines Einfedervorgangs und/oder Ausfedervorgangs der Federeinrichtung genutzt werden und in der Bremseinrichtung in nutzbare Energie umgewandelt werden. Dabei kann die Nutzung der Federenergie erfindungsgemäß auf sehr einfache Weise realisiert werden, ohne dass hierbei ein Gewicht eines Zweirads in großem Umfang vergrößert wird. Die Federeinrichtung kann eine mechanische und/oder hydraulische und/oder pneumatische Federeinrichtung sein.

Die Koppeleinrichtung ist derart eingerichtet, dass ein Federvorgang der Federeinrichtung, d.h. ein Einfedern oder ein Ausfedern, zu einer Druckänderung in der hydraulischen Bremsleitung der Bremseinrichtung führt.

Weiterhin umfasst die Zweirad-Baugruppe eine Arretiervorrichtung, welche an der Federeinrichtung angeordnet ist. Die Arretiervorrichtung ist eingerichtet, die Federeinrichtung zu arretieren. Besonders bevorzugt ist hierbei eine Steuereinheit eingerichtet, die Federeinrichtung in Abhängigkeit eines Drucks in der hydraulischen Bremsleitung zu aktivieren. Dies ist insbesondere dann hilfreich, wenn bei einem Bremsvorgang mit dem Zweirad ein Einnicken des Lenkers aufgrund einer Federwirkung der Federeinrichtung am Vorderrad des Zweirads durch eine Verlagerung des Schwerpunkts des Fahrers nach vorne, auftritt. Das Eintauchen der Federgabel entsteht durch ein Moment beim Bremsen durch die erhöhte Schwerpunktlage des Systems Fahrrad/Fahrer (Bremsnicken).Um hierbei ein Überschlagrisiko für den Fahrer zu reduzieren, wird die Federeinrichtung am Vorderrad des Zweirads arretiert, sodass ein Einnicken des Lenkers verhindert wird und der Bremsvorgang sicherer ist.

Die Unteransprüche zeigen bevorzugte Weiterbildungen der Erfindung.

Bevorzugt ist die Koppeleinrichtung eine unidirektionale Koppeleinrichtung, welche vorzugsweise nur in Richtung von der Federeinrichtung zur Bremseinrichtung wirkt. Weiter bevorzugt wirkt die Koppeleinrichtung auch in die andere Richtung, beispielsweise für einen Druckabbau oder um nach einem Eingriff das Fluid wieder zurück zur Federeinrichtung fördern zu können.

Bevorzugt ist die Koppeleinrichtung derart eingerichtet, dass ein Federvorgang der Federeinrichtung, d. h. ein Einfedern oder ein Ausfedern, zu einer Druckerhöhung in der hydraulischen Bremsleitung führt, die somit vorzugsweise unmittelbar während eines Bremsvorgangs verwendet werden kann. Es kann auch eine Druckreduzierung durch den Federvorgang in der hydraulischen Bremsleitung erzeugt werden.

Vorzugsweise ist die Federeinrichtung eine Federgabel oder ein Federbein für ein Vorderrad eines Zweirads, insbesondere eines Fahrrads. Alternativ ist die Federeinrichtung eine mittige Federeinrichtung an einem Rahmen eines Fahrrads (Hinterbaufederung) oder einer Sattelfedereinrichtung.

Besonders bevorzugt ist die Federeinrichtung eine pneumatische Federeinrichtung, wobei vorzugweise eine Druckänderung in einem Pneumatikkreis oder dergleichen unmittelbar mittels der Koppeleinrichtung auf die hydraulische Bremsleitung übertragbar ist.

Weiter bevorzugt weist die Koppeleinrichtung einen Druckübersetzer auf. Durch den Druckübersetzer kann eine definierte Druckerhöhung oder Druckreduzierung des durch die Federeinrichtung erzeugten Drucks für die Bremseinrichtung ermöglicht werden.

Weiter bevorzugt umfasst die Zweirad-Baugruppe einen Druckregler und eine Steuereinheit. Die Steuereinheit ist eingerichtet, den Druck in der hydraulischen Bremsleitung mittels des Druckreglers zu regeln. Somit kann vermieden werden, dass aufgrund eines Überdrucks beispielsweise ein zu starkes Bremsen mittels der Bremseinrichtung erfolgt.

Die Bremseinrichtung ist besonders bevorzugt eine Vorderradbremse eines Zweirads, insbesondere eines Fahrrads und besonders bevorzugt eines Elektrofahrrads.

Gemäß einer weiteren bevorzugten Ausgestaltung der Erfindung umfasst die Zweirad-Baugruppe ferner einen Druckspeicher, welcher bevorzugt an der hydraulischen Bremsleitung angeordnet ist und dessen Druckniveau mittels der Federeinrichtung über die Koppeleinrichtung veränderbar ist. Somit ist es möglich, während eines Fahrbetriebs des Zweirads die durch die Federeinrichtung bereitgestellte Energie im Druckspeicher zu speichern und dann beispielsweise bei einem Bremsvorgang des Zweirads in der Bremseinrichtung zu nutzen. Der Druckspeicher ermöglicht somit eine Nutzung der Federenergie unabhängig vom Zeitpunkt der Erzeugung der Energie durch die Federeinrichtung.

Der Druckspeicher ist vorzugsweise ein Überdruckspeicher. Hierdurch kann der Druck aus dem Druckspeicher unmittelbar beispielsweise zur Erzeugung einer Bremskraft in der Bremseinrichtung verwendet werden. Alternativ ist der Druckspeicher ein Unterdruckspeicher. Hierbei kann der Unterdruckspeicher beispielsweise zur Reduzierung einer Bremskraft in der Bremseinrichtung verwendet werden. Besonders bevorzugt sind zwei Druckspeicher vorgesehen, wobei einer der Druckspeicher als Überdruckspeicher und der andere der Druckspeicher als Unterdruckspeicher vorgesehen sind.

Weiter bevorzugt umfasst die Zweirad-Baugruppe bevorzugt eine Steuereinrichtung, welche eingerichtet ist, mittels des Drucks aus dem Druckspeicher eine Antiblockiersteuerung eines Rads des Zweirads bereitzustellen.

Gemäß einer weiteren bevorzugten Ausgestaltung der Erfindung umfasst die Zweirad-Baugruppe eine Steuereinrichtung, welche eingerichtet ist, mittels des Drucks aus dem Druckspeicher eine Antischlupf-Regelung bereitzustellen.

Weiter bevorzugt umfasst die Zweirad-Baugruppe eine Steuereinheit, welche eingerichtet ist, mittels des Drucks aus dem Druckspeicher bei einem Stillstand des Zweirads eine Wegfahrsperre auszuführen. Dies kann beispielsweise derart realisiert werden, dass bei einem Stillstand des Zweirads mittels des Drucks im Druckspeicher die Radbremse aktiviert ist, sodass ein Rad des Zweirads blockiert ist und ein Wegschieben des Zweirads oder dergleichen nicht möglich ist.

Weiterhin betrifft die vorliegende Erfindung ein Zweirad mit einer erfindungsgemäßen Zweirad-Baugruppe. Das Zweirad ist vorzugsweise ein Fahrrad. Das Fahrrad ist weiter bevorzugt ein Elektrofahrrad mit einem elektrischen Energiespeicher, insbesondere einem Akku oder einer Batterie, wobei eine Steuereinheit mit dem Energiespeicher verbunden ist und vom Energiespeicher mit elektrischer Energie versorgt wird.

Ferner betrifft die vorliegende Erfindung ein Verfahren zur Nutzung einer Federenergie, welche während eines Fahrens mit einem Zweirad erzeugt wird, in einer Bremseinrichtung des Zweirads.

Besonders bevorzugt wird das Verfahren zur Erhöhung oder Reduzierung einer Bremskraft eines Zweirads verwendet, wobei eine während eines Fahrens erzeugte Federkraft zur Erhöhung oder Reduzierung eines Drucks in einer hydraulischen Bremseinrichtung verwendet wird.

Besonders einfach kann das Verfahren dann ausgeführt werden, wenn unmittelbar während eines Bremsvorgangs die dabei erzeugte Federkraft, insbesondere an einem Vorderrad des Zweirads, dazu verwendet wird, eine Bremskraft in der hydraulischen Bremseinrichtung zu erhöhen. Hierdurch kann eine unmittelbare Kopplung zwischen der Federeinrichtung und der Bremseinrichtung ermöglicht werden, wobei eine direkte Verbesserung eines Bremsverhaltens des Zweirads erreichbar ist.

Weiter bevorzugt ist die Federeinrichtung eine pneumatische Federeinrichtung und eine Druckerhöhung im Pneumatiksystem wird mittels eines Druckübersetzers auf die hydraulische Bremsleitung übertragen. Hierdurch ist auch noch eine Druckübersetzung, insbesondere eine Druckerhöhung, möglich. Alternativ kann der Druckübersetzer auch zur Druckreduzierung verwendet werden.

Gemäß einer weiteren bevorzugten Ausgestaltung des erfindungsgemäßen Verfahrens wird der auf die hydraulische Bremseinrichtung übertragene Druck in einem Druckspeicher, insbesondere an der hydraulischen Bremsleitung, gespeichert. Durch das Speichern des Drucks kann eine zeitliche Entkopplung zwischen der Erzeugung der Federenergie und der Nutzung der Federenergie in der Bremseinrichtung erreicht werden.

Vorzugsweise verwendet das erfindungsgemäße Verfahren den Druck aus dem Druckspeicher für eine Antiblockier-Regelung und/oder eine Antischlupf-Regelung.

Weiter bevorzugt verwendet das erfindungsgemäße Verfahren den Druck aus dem Druckspeicher bei einem Stillstand des Zweirads für eine Wegfahrsperre, indem vorzugsweise eine Radbremse des Zweirads blockiert wird.

Besonders bevorzugt sind der Druckspeicher und die Koppeleinrichtung sowie die Federeinrichtung in einem gemeinsamen Gehäuse angeordnet. Das gemeinsame Gehäuse ist besonders bevorzugt ein Federbeingehäuse einer Federgabel eines Zweirads. Hierdurch kann ein besonders kompakter Aufbau der Zweirad-Baugruppe bereitgestellt werden. Ferner kann dadurch auch ein Gewicht der Zweirad-Baugruppe kleingehalten werden, da insbesondere Bauteile, wie beispielsweise das Federbeingehäuse, verwendet werden, welche sowieso schon am Zweirad vorhanden sind.

Es sei ferner angemerkt, dass vorzugsweise eine gemeinsame Steuereinheit für alle Steuerungsaufgaben vorgesehen ist. Wenn das Zweirad ein Elektrofahrrad ist, ist die gemeinsame Steuereinheit in die sowieso im Elektrofahrrad vorhandene Steuereinheit integriert.

### Kurze Beschreibung der Zeichnungen

Nachfolgend wird ein Ausführungsbeispiel der Erfindung unter Bezugnahme auf die begleitende Zeichnung im Detail beschrieben. In der Zeichnung sind gleiche bzw. funktional gleiche Bauteile jeweils mit den gleichen Bezugszeichen bezeichnet. In der Zeichnung ist:
- Figur 1: eine schematische Ansicht eines Zweirads als Elektrofahrrad gemäß einem ersten bevorzugten Ausführungsbeispiel der Erfindung, und
- Figur 2: eine schematische Darstellung einer Zweirad-Baugruppe gemäß einem ersten Ausführungsbeispiel der Erfindung, und
- Figur 3: eine schematische Darstellung einer Zweirad-Baugruppe gemäß einem zweiten Ausführungsbeispiel der Erfindung.

### Bevorzugte Ausführungsformen der Erfindung

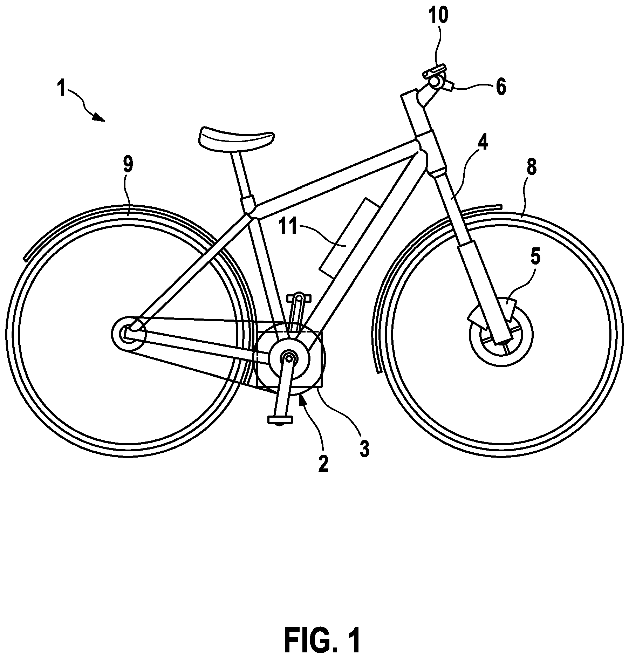

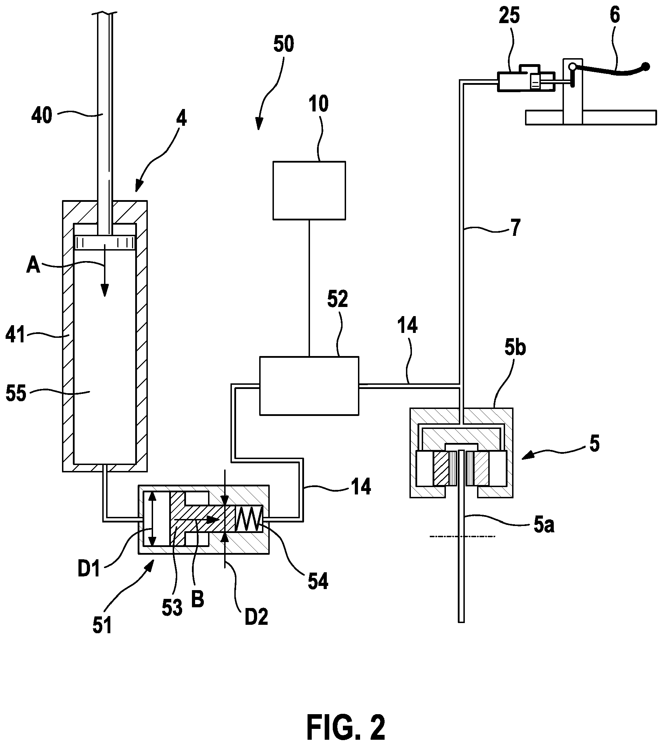

Nachfolgend wird unter Bezugnahme auf die Figuren 1 und 2 eine Zweirad-Baugruppe 50 eines Zweirads 1 eines ersten Ausführungsbeispiels im Detail beschrieben.

Wie aus Figur 1 ersichtlich, ist das Zweirad 1 ein Elektrofahrrad und umfasst einen Kurbeltrieb 2 mit Pedalen und einem elektrischen Antrieb 3, welcher im Bereich des Kurbeltriebs 2 angeordnet ist. Das Bezugszeichen 11 bezeichnet einen Akku. Das Zweirad 1 umfasst ferner ein Vorderrad 8 und ein Hinterrad 9, wobei am Vorderrad 8 eine Federeinrichtung 4 angeordnet ist. Die Federeinrichtung 4 ist eine Federgabel.

Die Federeinrichtung 4 umfasst ein Federbein 40, welches in einem Federzylinder 41 geführt ist. Im Inneren des Federzylinders 41 ist ein Pneumatikraum 55 ausgebildet, welcher vorzugsweise mit Luft gefüllt ist. Das Federbein 40 ist mit einem nicht gezeigten Lenker des Zweirads verbunden. Der Federzylinder 41 ist mit einer Nabe des Vorderrads 8 verbunden.

Ferner weist das Zweirad 1 eine Bremseinrichtung mit einem Bremsauslöser 6, in diesem Ausführungsbeispiel einem Bremshebel und einem Bremszylinder 25, einer Radbremse 5 sowie einer hydraulischen Bremsleitung 7 auf. Dies ist im Detail aus Figur 2 ersichtlich. Die Radbremse 5 umfasst dabei eine Bremsscheibe 5a und eine Bremszange 5b.

Wie aus Figur 2 ersichtlich ist, zweigt von der hydraulischen Bremsleitung 7 eine hydraulische Verbindungsleitung 14 ab, welche zur Federeinrichtung 4 führt. In der hydraulischen Verbindungsleitung 14 ist eine Koppeleinrichtung 51 sowie ein Druckregler 52 angeordnet.

Die Koppeleinrichtung 51 ist ein Druckübersetzer, welcher einen Kolben 53 mit einem ersten Durchmesser D1 und einem zweiten Durchmesser D2 aufweist, welcher kleiner als der erste Durchmesser D1 ist. Der Kolben 53 ist dabei mit dem ersten Durchmesser D1 zur Federeinrichtung 4 gerichtet und mit dem zweiten Durchmesser D2 zur hydraulischen Bremseinrichtung gerichtet. Ferner ist ein Rückstellelement 54 in Form einer Feder vorgesehen, um den Kolben 53 in seine Ausgangsposition zurückzustellen.

Die Funktion der erfindungsgemäßen Zweirad-Baugruppe 50 ist dabei wie folgt: Wenn die Federeinrichtung 4 einen Einfedervorgang ausführt, wie in Figur 2 durch den Pfeil A angedeutet, wird gasförmiges Medium, welches in einem Pneumatikraum 55 angeordnet ist, komprimiert. Da der Pneumatikraum 55 mit dem Kolben 53 verbunden ist, bewegt sich der Kolben 53 in Richtung des Pfeils B. Hierdurch erfolgt eine Druckerhöhung in der Verbindungsleitung 14 zur hydraulischen Bremseinrichtung. Durch die unterschiedlichen Durchmesser am Kolben 53 wird die Druckänderung aus der Federeinrichtung 4 übersetzt. Eine Steuereinheit 10 stellt dabei einen Druck, welcher mittels des Druckreglers 52 geregelt wird, ein, um zu vermeiden, dass ein unzulässig hoher Druck in der hydraulischen Bremsleitung 7 erzeugt wird. Die Druckerhöhung in der hydraulischen Bremsleitung 7 kann somit unmittelbar an die Radbremse 5 geführt werden, um einen Bremsvorgang auszulösen und/oder zu verstärken.

Im normalen Fahrbetrieb ist üblicherweise ein Bremsvorgang, welcher durch den Bremsauslöser 6 und den Bremszylinder 25 auf die Radbremse 5 ausgeübt wird, gleichzeitig mit einem Einnicken des Lenkers verbunden (Bremsnicken). Dadurch wird die Federeinrichtung 4 in Pfeilrichtung A gleichzeitig mit dem eingeleiteten Bremsvorgang bewegt, wobei dann über die Koppeleinrichtung 51 ein Druck in der hydraulischen Bremsleitung 7 zusätzlich erhöht wird. Dadurch wird gleichzeitig mit dem Einleiten des Bremsvorgangs mittels des Bremshebels die Bremswirkung durch die Federeinrichtung 4 verstärkt. Hierdurch kann ein besseres Bremsverhalten erreicht werden. Durch den Druckregler 52 kann die Druckerhöhung in der hydraulischen Bremsleitung 7 dabei gezielt durch die Steuereinheit 10 geregelt werden. Hierdurch wird ein selbstverstärkendes Bremsprinzip generiert.

Da bei einem Bremsvorgang aufgrund der Lastverlagerung des Schwerpunkts auf das Vorderrad des Zweirads eine Anpresskraft des Vorderrads 8 auf die Fahrbahn ansteigt, ergibt sich eine Erhöhung einer Haftreibungskraft zwischen dem Vorderrad und der Fahrbahn. Hierdurch ist jedoch eine Erhöhung einer maximal übertragbaren Bremskraft auf die Fahrbahn möglich. Daher ist es vorteilhaft, am Zweirad 1 am Vorderrad 8 stärker zu bremsen als am Hinterrad 9.

Somit ist es erfindungsgemäß möglich, durch Koppelung einer Federeinrichtung 4 des Zweirads mit einer hydraulischen Bremseinrichtung des Zweirads eine verbesserte Verzögerung bei einem Bremsvorgang zu ermöglichen. Die Steuereinheit 10 stellt dabei über den Druckregler 52 sicher, dass kein Blockieren des Vorderrads auftritt, um einen Überschlag des Fahrers am Zweirad zu verhindern.

Zu dem beschriebenen Ausführungsbeispiel sei ferner angemerkt, dass die Federeinrichtung neben der beschriebenen Federgabel am Vorderrad beispielsweise auch eine Federeinrichtung an einem Rahmen zur Federung des Hinterrads sein kann oder beispielsweise auch eine Federeinrichtung an einer Sattelstütze des Zweirads sein kann. Ferner muss auch das Medium in der als Federgabel ausgebildeten Federeinrichtung 4 des Ausführungsbeispiels nicht gasförmig sein, sondern kann auch flüssig sein.

Die Zweirad-Baugruppe wird besonders bevorzugt in einem Elektrofahrrad verwendet, wobei dann die Steuereinheit 10 mit einem Energiespeicher 11 des Elektrofahrrads zur Energieversorgung verbunden ist. Alternativ kann die Baugruppe auch an ein konventionelles Fahrrad mit zusätzlichem Akku zur Stromversorgung angebracht werden.

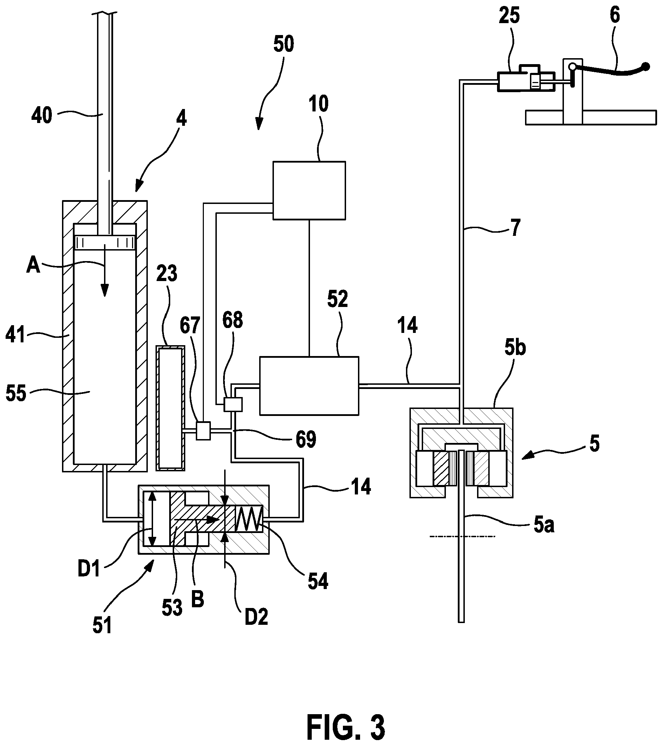

Figur 3 zeigt eine Zweirad-Baugruppe gemäß einem zweiten Ausführungsbeispiel der Erfindung, welches im Wesentlichen dem ersten Ausführungsbeispiel entspricht.

Hierbei umfasst die Zweirad-Baugruppe des zweiten Ausführungsbeispiels ferner einen Druckspeicher 23, welcher an der hydraulischen Verbindungsleitung 14 zwischen dem Druckregler 52 und der Koppeleinrichtung 51 angeordnet ist. Der Druckspeicher 23 kann mittels eines ersten Sperrventils 67 mit der Verbindungsleitung 14 verbunden werden oder die Verbindung unterbrochen werden. Ein zweites Sperrventil 68 ist in der Verbindungsleitung 14 zwischen dem Abzweigpunkt 69 zum Druckspeicher 23 und dem Druckregler 52 angeordnet. Die beiden Sperrventile 67, 68 können mittels der Steuereinheit 10 geöffnet und geschlossen werden. Somit ist es möglich, dass während des normalen Fahrvorgangs des Zweirads bei Federvorgängen das zweite Sperrventil 68 geschlossen ist und das erste Sperrventil 67 geöffnet ist, sodass ein Druck, welcher durch die Federvorgänge während des normalen Fahrens erzeugt wird, im Druckspeicher 23 als Energie gespeichert werden kann. Die im Druckspeicher 23 gespeicherte Energie kann dann beispielsweise bei einem Bremsvorgang durch Öffnen des zweiten Sperrventils 68 und des ersten Sperrventils 67 über die Verbindungsleitung 14 in die hydraulische Bremsleitung 7 zugeführt werden, um dadurch eine Bremskraft an der Radbremse 5 erhöht werden, wenn der Druckspeicher 23 ein Überdruckspeicher ist. Es sei angemerkt, dass der Druckspeicher 23 auch ein Unterdruckspeicher sein kann und ein Druckniveau in der Bremsleitung 7 reduzieren kann, was beispielsweise bei einem Blockieren des Rades während eines Bremsvorgangs sinnvoll ist.

Vorzugsweise kann beim zweiten Ausführungsbeispiel noch ein Ausgleichsbehälter vorgesehen werden, der beim Druckaufbau bzw. Druckabbau ermöglicht, Fluid in den Kreislauf nachzufördern bzw. aus dem Kreislauf aufzunehmen. Der Ausgleichsbehälter ist vorzugsweise an die Verbindungsleitung 14 angeschlossen.

Weiterhin ist es auch denkbar, dass bei den beschriebenen Ausführungsbeispielen zusätzlich eine elektrisch betriebene Pumpe vorgesehen ist, um ein Druckniveau in der hydraulischen Bremsleitung 7 und/oder des Druckspeichers zu ändern. Die Pumpe wird vorzugsweise in einem Elektrofahrrad verwendet und durch einen am Elektrofahrrad vorgesehenen Energiespeicher mit elektrischer Energie versorgt.

## Patentansprüche

1. Zweirad-Baugruppe, insbesondere Fahrrad-Baugruppe, umfassend:
- eine Federeinrichtung (4),
- eine hydraulische Bremseinrichtung mit einer Radbremse (5), einem Bremsauslöser (6) und einer hydraulischen Bremsleitung (7), welche den Bremsauslöser (6) mit der Radbremse (5) verbindet, und
- eine Koppeleinrichtung (51), welche die Federeinrichtung (4) und die Bremseinrichtung miteinander koppelt, und
- eine Arretiervorrichtung, welche an der Federeinrichtung (4) angeordnet ist,
wobei die Arretiervorrichtung eingerichtet ist, die Federeinrichtung (4) zu arretieren,
**dadurch gekennzeichnet, dass**
die Koppeleinrichtung (51) derart eingerichtet ist, dass ein Federvorgang der Federeinrichtung (4) zu einer Druckänderung in der Bremsleitung (7) der Bremseinrichtung führt.

2. Zweirad-Baugruppe nach Anspruch 1, wobei die Koppeleinrichtung (51) eine in nur eine Richtung wirkende Koppeleinrichtung (51) ist.

3. Zweirad-Baugruppe nach Anspruch 2, wobei die Koppeleinrichtung (51) von der Federeinrichtung (4) zur Bremseinrichtung wirkt.

4. Zweirad-Baugruppe nach einem der vorhergehenden Ansprüche, wobei die Koppeleinrichtung (51) derart eingerichtet ist, dass ein Federvorgang der Federeinrichtung (4) zu einer Druckerhöhung in der Bremsleitung (7) der Bremseinrichtung führt.

5. Zweirad-Baugruppe nach einem der vorhergehenden Ansprüche, wobei die Federeinrichtung (4) ein Federdämpfer eines Vorderrads (8) oder Hinterrads (9) oder eines Sattels eines Zweirads (1) ist.

6. Zweirad-Baugruppe nach einem der vorgehenden Ansprüche, wobei die Federeinrichtung (4) eine Gas-Federeinrichtung ist und die Koppeleinrichtung (51) fluiddicht die Gas-Federeinrichtung (4) mit der hydraulischen Bremseinrichtung koppelt.

7. Zweirad-Baugruppe nach einem der vorhergehenden Ansprüche, wobei die Koppeleinrichtung (51) ferner einen Druckübersetzer umfasst.

8. Zweirad-Baugruppe nach einem der vorhergehenden Ansprüche, ferner umfassend einen Druckregler (52) und eine Steuereinheit (10), welche eingerichtet ist, einen Druck in der hydraulischen Bremsleitung (7) zu steuern.

9. Zweirad-Baugruppe nach einem der vorhergehenden Ansprüche, wobei die Bremseinrichtung eine Vorderradbremse eines Zweirads (1) ist.

10. Zweirad-Baugruppe nach einem der vorhergehenden Ansprüche, ferner umfassend einen Druckspeicher (23), welcher eingerichtet ist, Energie, welche durch eine Federwirkung der Federeinrichtung (4) bereitgestellt wird, zu speichern und/oder Druck aus der Bremsleitung (7) aufzunehmen, um den Druck in der Bremsleitung (7) zu reduzieren.

11. Verfahren zur Erhöhung oder Reduzierung einer Bremskraft eines Zweirads (1), insbesondere eines Elektrofahrrads, wobei eine Bremskraft einer hydraulischen Bremseinrichtung durch Federwirkung einer Federeinrichtung (4), welche mit der hydraulischen Bremseinrichtung gekoppelt ist, erhöht oder reduziert wird,
**gekennzeichnet durch**
eine Arretiervorrichtung, welche an der Federeinrichtung (4) angeordnet ist, wobei die Arretiervorrichtung eingerichtet ist, die Federeinrichtung (4) zu arretieren.

12. Verfahren nach Anspruch 11, wobei die Federeinrichtung (4) mit der Bremseinrichtung direkt gekoppelt ist, sodass eine während eines Bremsvorgangs erzeugte Federkraft direkt zur Erhöhung oder Reduzierung eines Drucks in der hydraulischen Bremseinrichtung verwendet wird.

13. Verfahren nach Anspruch 11 oder 12, wobei die Federeinrichtung (4) einen Pneumatikraum (55) aufweist und eine Druckänderung im Pneumatikraum (55) mittels eines Druckübersetzers auf die hydraulische Bremseinrichtung übertragen wird.

14. Verfahren nach einem der Ansprüche 11 bis 13, wobei die zur Erhöhung oder Reduzierung des Drucks in der hydraulischen Bremseinrichtung basierend auf der Federwirkung der Federeinrichtung (4) bereitgestellte Kraft mittels eines Druckreglers (52) geregelt wird.

15. Verfahren nach einem der Ansprüche 11 bis 14, wobei eine während eines Fahrens des Zweirads (1) mittels der Federeinrichtung (4) erzeugte Kraft in einem Druckspeicher (10) als potenzielle Energie gespeichert wird und in einem Bremsfall zur Erhöhung und/oder Reduzierung der Bremskraft in der hydraulischen Bremseinrichtung verwendet wird.

## Claims

1. Two-wheeler assembly, in particular bicycle assembly, comprising:
- a spring device (4),
- a hydraulic brake device having a wheel brake (5), a brake activator (6) and a hydraulic brake line (7) which connects the brake activator (6) to the wheel brake (5), and
- a coupling device (51) which couples the spring device (4) and the brake device to one another, and
- an arresting device which is arranged on the spring device (4),
wherein the arresting device is configured to arrest the spring device (4),
**characterized in that**
the coupling device (51) is configured in such a way that a spring operation of the spring device (4) leads to a pressure change in the brake line (7) of the brake device.

2. Two-wheeler assembly according to Claim 1, wherein the coupling device (51) is a coupling device (51) which acts in only one direction.

3. Two-wheeler assembly according to Claim 2, wherein the coupling device (51) acts from the spring device (4) to the brake device.

4. Two-wheeler assembly according to one of the preceding claims, wherein the coupling device (51) is configured in such a way that a spring operation of the spring device (4) leads to a pressure increase in the brake line (7) of the brake device.

5. Two-wheeler assembly according to one of the preceding claims, wherein the spring device (4) is a spring damper of a front wheel (8) or rear wheel (9) or of a saddle of a two-wheeler (1).

6. Two-wheeler assembly according to one of the preceding claims, wherein the spring device (4) is a gas spring device, and the coupling device (51) couples the gas spring device (4) to the hydraulic brake device in a fluid-tight manner.

7. Two-wheeler assembly according to one of the preceding claims, wherein the coupling device (51) further comprises a pressure intensifier.

8. Two-wheeler assembly according to one of the preceding claims, further comprising a pressure regulator (52) and a control unit (10) which is configured to control a pressure in the hydraulic brake line (7).

9. Two-wheeler assembly according to one of the preceding claims, wherein the brake device is a front wheel brake of a two-wheeler (1).

10. Two-wheeler assembly according to one of the preceding claims, further comprising a pressure accumulator (23) which is configured to store energy which is provided by a spring action of the spring device (4) and/or to receive pressure from the brake line (7) in order to reduce the pressure in the brake line (7).

11. Method for increasing or reducing a braking force of a two-wheeler (1), in particular of an electric bicycle, wherein a braking force of a hydraulic brake device is increased or reduced by spring action of a spring device (4) which is coupled to the hydraulic brake device,
**characterized by**
an arresting device which is arranged on the spring device (4), wherein the arresting device is configured to arrest the spring device (4).

12. Method according to Claim 11, wherein the spring device (4) is directly coupled to the brake device such that a spring force generated during a braking operation is used directly to increase or reduce a pressure in the hydraulic brake device.

13. Method according to Claim 11 or 12, wherein the spring device (4) has a pneumatic chamber (55), and a pressure change in the pneumatic chamber (55) is transmitted by means of a pressure intensifier to the hydraulic brake device.

14. Method according to one of Claims 11 to 13, wherein the force provided to increase or reduce the pressure in the hydraulic brake device on the basis of the spring action of the spring device (4) is regulated by means of a pressure regulator (52).

15. Method according to one of Claims 11 to 14, wherein a force generated by means of the spring device (4) during a riding of the two-wheeler (1) is stored in a pressure accumulator (10) as potential energy and is used in a braking situation to increase and/or reduce the braking force in the hydraulic brake device.

## Revendications

1. Module pour un véhicule à deux roues, en particulier module de bicyclette, comprenant:
- un dispositif amortisseur (4),
- un système de freinage hydraulique avec un frein de roue (5), un déclencheur de freinage (6) et une conduite de freinage hydraulique (7), qui relie le déclencheur de freinage (6) au frein de roue (5), et
- un système de couplage (51), qui couple l'un à l'autre le dispositif amortisseur (4) et le système de freinage, et
- un dispositif de blocage, qui est disposé sur le dispositif amortisseur (4), dans lequel le dispositif de blocage est conçu pour bloquer le dispositif amortisseur (4),
**caractérisé en ce que** le système de couplage (51) est configuré de telle manière qu'une action d'amortissement du dispositif amortisseur (4) conduise à une variation de pression dans la conduite de freinage (7) du système de freinage.

2. Module pour un véhicule à deux roues selon la revendication 1, dans lequel le système de couplage (51) est un système de couplage (51) n'agissant que dans une direction.

3. Module pour un véhicule à deux roues selon la revendication 2, dans lequel le système de couplage (51) agit à partir du dispositif amortisseur (4) vers le système de freinage.

4. Module pour un véhicule à deux roues selon l'une quelconque des revendications précédentes, dans lequel le système de couplage (51) est configuré de telle manière qu'une action d'amortissement du dispositif amortisseur (4) conduise à une augmentation de pression dans la conduite de freinage (7) du système de freinage.

5. Module pour un véhicule à deux roues selon l'une quelconque des revendications précédentes, dans lequel le dispositif amortisseur (4) est un amortisseur d'une roue avant (8) ou d'une roue arrière (9) ou d'une selle d'une bicyclette (1).

6. Module pour un véhicule à deux roues selon l'une quelconque des revendications précédentes, dans lequel le dispositif amortisseur (4) est un dispositif amortisseur à gaz et le système de couplage (51) couple de façon étanche au fluide le dispositif amortisseur à gaz (4) au système de freinage hydraulique.

7. Module pour un véhicule à deux roues selon l'une quelconque des revendications précédentes, dans lequel le système de couplage (51) comprend en outre un convertisseur de pression.

8. Module pour un véhicule à deux roues selon l'une quelconque des revendications précédentes, comprenant en outre un régulateur de pression (52) et une unité de commande (10), qui est configurée pour commander une pression dans la conduite de freinage hydraulique (7).

9. Module pour un véhicule à deux roues selon l'une quelconque des revendications précédentes, dans lequel le système de freinage est un frein de roue avant d'une bicyclette (1).

10. Module pour un véhicule à deux roues selon l'une quelconque des revendications précédentes, comprenant en outre un accumulateur de pression (23), qui est conçu pour stocker de l'énergie, qui est fournie pendant une action d'amortissement du dispositif amortisseur (4), et/ou pour capter de la pression de la conduite de freinage (7), afin de réduire la pression dans la conduite de freinage (7).

11. Procédé pour augmenter ou diminuer une force de freinage d'une bicyclette (1), en particulier d'une bicyclette électrique, dans lequel on augmente ou on réduit une force de freinage d'un système de freinage hydraulique par l'action d'amortissement d'un dispositif amortisseur (4), qui est couplé au système de freinage hydraulique, **caractérisé par** un dispositif de blocage, qui est disposé sur le dispositif amortisseur (4), dans lequel le dispositif de blocage est configuré pour bloquer le dispositif amortisseur (4).

12. Procédé selon la revendication 11, dans lequel le dispositif amortisseur (4) est couplé directement au système de freinage, de telle manière qu'une force de freinage produite pendant une opération de freinage soit utilisée directement pour augmenter ou réduire une pression dans le système de freinage hydraulique.

13. Procédé selon une revendication 11 ou 12, dans lequel le dispositif amortisseur (4) présente une chambre pneumatique (55) et une variation de pression dans la chambre pneumatique (55) est transmise au système de freinage hydraulique au moyen d'un convertisseur de pression.

14. Procédé selon l'une quelconque des revendications 11 à 13, dans lequel la force fournie pour augmenter ou réduire la pression dans la conduite de freinage hydraulique sur la base de l'action d'amortissement du dispositif amortisseur (4) est régulée au moyen d'un régulateur de pression (52).

15. Procédé selon l'une quelconque des revendications 11 à 14, dans lequel une force produite au moyen du dispositif amortisseur (4) pendant un déplacement de la bicyclette (1) est stockée dans un accumulateur de pression (10) sous forme d'énergie potentielle et est utilisée en cas de freinage pour augmenter et/ou réduire la force de freinage dans la conduite de freinage hydraulique.
